# EUROPÄISCHE PATENTSCHRIFT

(11) **EP 2 080 953 B1**
(45) Veröffentlichungstag und Bekanntmachung des Hinweises auf die Patenterteilung: **17.12.2014**
(21) Anmeldenummer: 08000618.2
(22) Anmeldetag: 15.01.2008
(51) Int. Cl.: F23N 5/00

(54) **Regelkreis und Verfahren zum Erstellen eines Prozessmodells hierfür**
Control loop and method for generating a process model therefor
Boucle de réglage et procédé pour déterminer un modèle de fonctionnement correspondant

(43) Veröffentlichungstag der Anmeldung: 22.07.2009
(73) Patentinhaber: STEAG Powitec GmbH, 45219 Essen (DE)
(72) Erfinder: Wintrich, Franz, 45309 Essen (DE); Stephan, Volker, 99976 Hüpstedt (DE)
(74) Vertreter: Patentanwälte Hosenthien-Held und Dr. Held

(56) Entgegenhaltungen:
- EP-A- 1 396 770
- EP-A- 1 890 207
- WO-A-02/077527

## Beschreibung

Die Erfindung betrifft einen Regelkreis mit den Merkmalen des Oberbegriffs des Anspruches 1 und ein Verfahren zum Erstellen eines Prozessmodells hierfür.

Bei einem bekannten Verfahren dieser Art werden für den Ansatz des neuronalen Netzes die Eingangskanäle empirisch ausgewählt und dann beibehalten, so dass eine statische Topologie vorliegt. Es besteht damit sowohl die Gefahr, dass signifikante Kanäle nicht berücksichtigt werden, als auch dass Rechnerleistung für nicht signifikante Kanäle verbraucht wird.

Der vorliegenden Erfindung liegt die Aufgabe zugrunde, einen Regelkreis der eingangs genannten Art besser an dynamische Prozesse anzupassen. Diese Aufgabe wird durch einen Regelkreis mit den Merkmalen des Anspruches 1 gelöst. Weitere vorteilhafte Ausgestaltungen sind Gegenstand der Unteransprüche. Ein Verfahren zum Erstellen eines Prozessmodells hierfür ist Gegenstand des Anspruches 5.

Indem das Prozessmodell für verschiedene Prozessdynamiken spezialisierte Funktionsapproximatoren bereithält, die dann auszuwählen sind, ist eine bessere Annäherung an die einzelnen Phasen des Prozesses mit besseren Prognosen möglich. Der Ansatz der Erfindung ist eine Modellierung der Prozessdynamik mit adaptiven, lernfähigen und selbstorganisierenden Funktionsapproximatonen, beispielsweise durch neuronale Netze. In einer Trainingsphase stellt sich mit der Nutzung mehrerer, gleich oder unterschiedlich strukturierten Funktionsapproximatoren im Parallelbetrieb mit speziellem, selbstorganisiertem Lemregime automatisch eine Spezialisierung der einzelnen Funktionsapproximatoren auf verschiedene, in den Trainingsdaten enthaltene Prozessdynamiken ein. Die Spezialisierung der einzelnen Funktionsapproximatoren wird anschließend genutzt, um den untersuchten Zeitbereich in Teilbereiche mit unterschiedlicher Prozessdynamik zu unterteilen.

Die Erfindung kann bei verschiedenen stationären thermodynamischen Anlagen, insbesondere Kraftwerken, Müllverbrennungsanlagen und Zementwerken, eingesetzt werden. Ein Einsatz des erfindungsgemäßen Regelkreises und des Verfahrens zur Erstellung eines Prozessmodells hierfür ist auch in anderen technischen Gebieten denkbar.

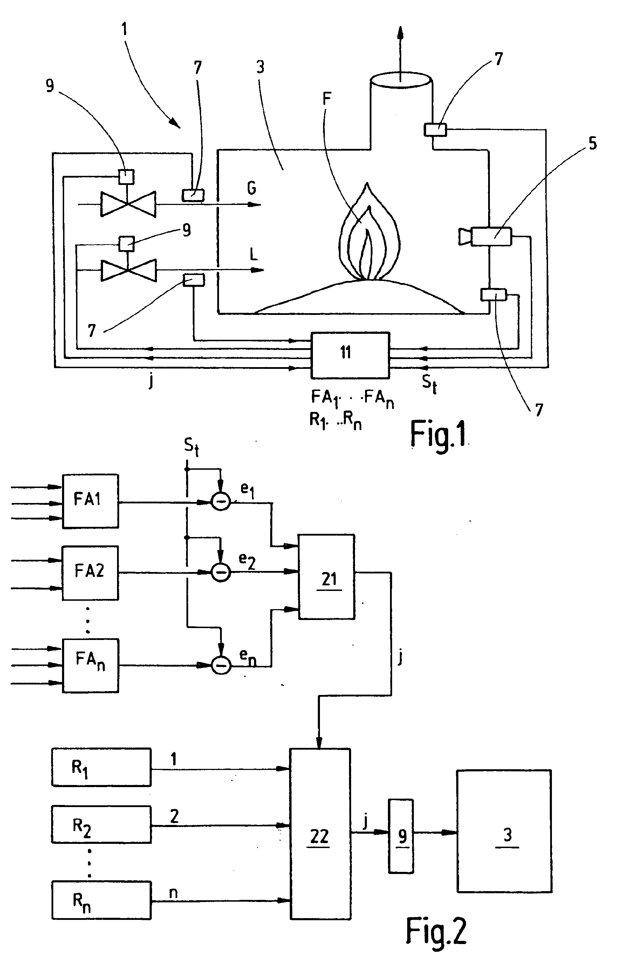

Im folgenden ist die Erfindung anhand eines in der Zeichnung dargestellten Ausführungsbeispiels näher erläutert. Es zeigen
- Fig. 1: eine schematische Darstellung eine Anlage mit erfindungsgemäßem Regelkreis,
- Fig. 2: die Auswahl eines Funktionsapproximatiors beim eingesetzten Prozessmodell,

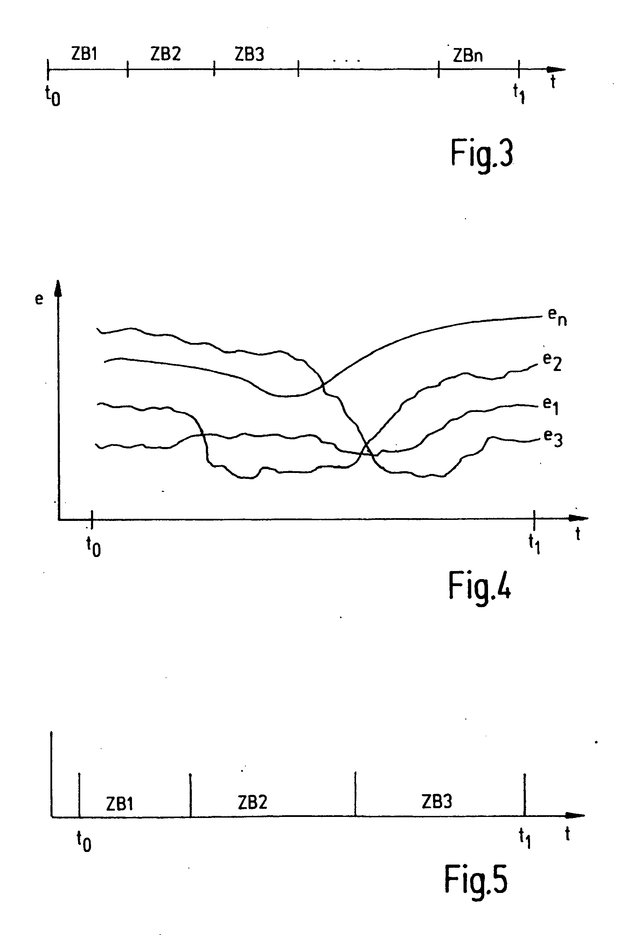

- Fig. 3: die Unterteilung des Gesamt-Zeitbereichs im zweiten Schritt der Erstellung des Prozessmodells,
- Fig. 4: das Ergebnis der Berechnung des Prognosefehlers im vierten Schritt der Erstellung des Prozessmodells, und
- Fig. 5: die neue Zuordnung der Zeitbereiche im fünften Schritt der Erstellung des Prozessmodells.

Eine Anlage 1, beispielsweise ein Kohle-, Öl- oder Gaskraftwerk, eine Müllverbrennungsanlage oder ein Zementwerk, umfasst einen Ofen 3, worunter auch ein Rost verstanden werden soll, wenigstens eine Beobachtungsvorrichtung 5, welche das Innere des Ofens 3 (bzw. den Rost) bildlich erfassen kann, vorzugsweise weitere Sensoren 7, wenigstens eine Stellvorrichtung 9, und einen Rechner 11, an welchen die Beobachtungsvorrichtung(en) 5, weiteren Sensoren 7 und Stellvorrichtung(en) 9 angeschlossen sind.

Dem Ofen 3 wird Brennstoff oder anderes umzusetzendes Material, kurz als Gut G bezeichnet, beispielsweise Kohle, Öl, Gas, Müll, Kalk oder dergleichen, sowie Primärluft (bzw. -sauerstoff) und Sekundärluft (bzw. -Sauerstoff), kurz als Luft L bezeichnet, zugeführt, wobei diese Zufuhr durch die vom Rechner 11 ansteuerbaren Stellvorrichtungen 9 gesteuert wird. Im Ofen 3 findet ein Verbrennungsprozess statt. Der dadurch erzeugter Flammenkörper F (sowie gegebenenfalls Emissionen der Wände des Ofens 3) wird von den Beobachtungsvorrichtungen 5 laufend erfasst. Die Beobachtungsvorrichtungen 5 umfassen jeweils neben einem die Wand des Ofens 3 durchdringenden optischen Zugang, wie beispielsweise einer Lanze oder einer in der EP 1621813 A1 offenbarten Vorrichtung, noch eine Kamera oder dergleichen, welche im optischen Bereich oder benachbarten Bereichen elektromagnetischer Wellen arbeitet. Bevorzugt ist eine zeitlich, örtlich und spektral hochauflösende Kamera, wie sie beispielsweise in der WO 02/070953 A1 beschrieben is.

Die Bilder des Flammenkörpers F (und der eventuellen Emissionen der Wände des Ofens 3) werden im Rechner 11 ausgewertet, beispielsweise nach einem Eigenwert-Verfahren, das in der WO 2004/018940 A1 beschrieben ist. Die aus den Bildern des Flammenkörpers F gewonnenen Daten sowie die Daten der weiteren Sensoren 7, welche beispielsweise die Zufuhr des Gutes G und der Luft L, Schadstoffkonzentrationen in den Abgasen oder die Konzentration des Freikalks (FCAO) messen, werden als Zustandsvariablen s(t) behandelt, die (zeitabhängig) den Zustand des Systems in der Anlage 1 im allgemeinen und des Verbrennungsprozesses im besonderen beschreiben und als Vektor zu betrachten sind.

Durch den Ofen 3 als (Regel-)Strecke, die Beobachtungsvorrichtung(en) 5 und die weiteren Sensoren 7, den Rechner 11 und die Stellvorrichtungen 9 wird ein Regelkreis definiert. Es kann auch ein konventioneller Regelkreis nur mit Ofen 3, Sensoren 7, Rechner 11 (und/oder Reglern Rᵢ) und Stellvorrichtungen 9 und ohne die Beobachtungsvorrichtung(en) 5 vorgesehen sein, dessen Regelung nur wenige Zustandsvariablen sₜ berücksichtigt (d.h. niederdimensional ist) und dann durch die Einbeziehung der Beobachtungsvorrichtung(en) 5 optimiert wird. Das System in der Anlage 1 ist beispielsweise auf bestimmte Soll-Werte oder auf einen stabilen Prozess (d.h. einen ruhigen, quasistationären Betrieb der Anlage 1) hin regelbar. In beiden Fällen werden der durch die Ist-Werte der Zustandsvariablen beschriebene Zustand bewertet und gegebenenfalls geeignete Stellaktionen (Stelleingriffe), kurz als Aktionen bezeichnet, ausgewählt, welche von den Stellvorrichtungen 9 auszuführen sind. Neben der Zufuhr von Gut G und Luft L können weitere Tätigkeiten von Stellvorrichtungen 9 und gegebenenfalls auch eine Probenentnahme eine Aktion in erfindungsgemäßen Sinne sein. Auch Störungen können als ungewollte Aktionen behandelt werden. Es sind einstellbare Kombinationen der beiden vorgenannten Regelungsfälle denkbar, die dann Kompromisse darstellen.

Die Bewertung des Zustandes und die Auswahl der geeigneten Aktionen kann beispielsweise gemäß einem Verfahren erfolgen, wie es in der WO 02/077527 A1 beschrieben ist. Im Rechner 11 ist wenigstens ein neuronales Netz implementiert, welches als ein Prozessmodell die Reaktionen der Zustände des Systems auf Aktionen speichert, also die (nicht-linearen) Verknüpfungen zwischen den Werten der Zustandsvariablen zu einem bestimmten Zeitpunkt und den dann getätigten Aktionen einerseits und den resultierenden Werten der Zustandsvariablen zu einem späteren (d.h. um ein bestimmtes Zeitintervall späteren) Zeitpunkt andererseits, und zwar zu möglichst vielen Zeitpunkten in der Vergangenheit. In diesem Sinne können auch Störungen als (ungewollte) Aktionen in das Prozessmodell einbezogen werden. Eine vom Prozessmodell, d.h. den gespeicherten Verknüpfungen unabhängige, Situationsbewertung, die in der Art einer vereinfachten Güte konzipiert ist, bewertet für einen bestimmten Zeitpunkt die Werte der Zustandsvariablen in Hinblick auf vorgegebene Optimierungsziele, d.h. wie nahe der Zustand des Systems zu diesem Zeitpunkt dem optimalen Zustand ist. Mit einer Bewertung eines - mit dem Prozessmodell in Abhängigkeit von einer bestimmten Aktion - vorhergesagten (prognostizierten) Zustandes zu einem zukünftigen Zeitpunkt lässt sich die Eignung der bestimmten Aktion zur Annäherung an das Optimierungsziel feststellen.

Zur Verbesserung der Genauigkeit werden nicht nur die Prozessmodelle durch die tatsächlichen Entwicklungen der Zustandsvariablen als Reaktion auf Aktionen laufend ergänzt, sondern es ist bereits bekannt, ein Wettbewerb mehrerer Prozessmodelle hinsichtlich der Qualität der Vorhersagen (Prognosen) stattfinden zu lassen. Wie beispielsweise in der EP 1 396 770 A1 beschrieben ist, werden hierzu im Hintergrund alternative Prozessmodelle, beispielsweise mit anderen Topologien, erstellt und trainiert, deren Vorhersagen mit dem oder den aktuell eingesetzten Prozessmodell(en) verglichen werden, um letztere gegebenenfalls zu ersetzen. Das aktuell eingesetzte Prozessmodell ist dann über einen längeren Zeitbereich in Benutzung. Die kurzfristige Prozessdynamik bleibt unberücksichtigt.

Erfindungsgemäß wird ein Prozessmodell erstellt und eingesetzt, das für verschiedene Prozessdynamiken spezialisierte Funktionsapproximatoren bereithält, um zwischen diesen auswählen zu können.

In einem ersten Schritt werden als Ansatz n gleiche oder unterschiedlich strukturierte Funktionsapproximatoren FAi (i =1, .... n) gewählt, also FA1 ... FAn, welche das zeitliche Verhalten der Zustandsvariablen sₜ modellieren sollen. Die für Trainingszwecke zur Verfügung stehenden, zeitabhängigen Daten der Beobachtungsvorrichtung(en) 5 und der gegebenenfalls vorhandenen weiteren Sensoren 7, also die gemessenen Zustandsvariablen sₜ, decken einen gewissen Gesamt-Zeitbereich ZB zwischen einer Zeit t₀ und einer Zeit t₁ ab. Dieser Gesamt-Zeitbereich wird in einem zweiten Schritt in n einzelne, gleich lange, zusammenhängende Zeitbereiche ZBi (i = 1, ... n) unterteilt, also ZB1, ... ZBn. Jedem Zeitbereich ZBi ist genau ein Funktionsapproximator FAi zugeordnet.

In einem dritten Schritt werden die Funktionsapproximatoren FAi auf ihrem jeweiligen Zeitbereich ZBi trainiert, d.h. FA1 auf ZB1, FA2 auf ZB2 etc. Nun werden in einem vierten Schritt alle Funktionsapproximatoren FAi auf dem Gesamt-Zeitbereich ZB getestet. Hierzu wird jeweils der Prognosefehler eᵢ (i = 1, ... n), d.h. die Abweichung, der jeweiligen Prognose der FAi bezüglich des definierten Zielwertes (in der Regel des tatsächlich gemessenen Zustandsvariablen) berechnet. Im Ergebnis entstehen n verschiedene, zeitabhängige Verläufe der Prognosefehler eᵢ über dem Gesamt-Zeitbereich ZB. In einem fünften Schritt werden die Zeitbereiche ermittelt, in denen jeder Funktionsapproximator FAi den kleinsten Prognosefehler eᵢ, also das beste Prognoseergebnis, erzielt hat, und diese Zeitbereiche den jeweiligen Funktionsapproximatoren FAi zugeordnet. Dabei kann es sein, dass sich die Reihenfolge, vorzugsweise auch die zeitliche Länge der Zeitbereiche, gegenüber der jeweils vorhergehenden Iteration (beim ersten Mal also dem Ansatz des zweiten Schrittes) ändert. Daher wird in einem sechsten Schritt geprüft, ob sich die Anordnung der Zeitbereiche noch ändert. Wenn ja, wird zum dritten Schritt zurückgekehrt. Wenn nein, wird das Verfahren im konvergierten Zustand abgebrochen.

Nachdem das Verfahren konvergiert ist, hat sich jeder Funktionsapproximator FAi auf eine bestimmte Prozessdynamik spezialisiert, die sich eindeutig von den anderen unterscheidet. Beispielsweise beschreibt FA1 ein Grundverhalten, FA2 ein bestimmtes transientes Verhalten etc.

Im Einsatz muss das so erstellte Prozessmodell künftige Zustände prognostizieren. Dabei wird ein Funktionsapproximator FAj ausgewählt und aktuell verwendet. In bestimmten zeitlichen Abständen, die vorzugsweise kleiner sind als die Zeitbereiche ZBi, die für die Erstellung des Prozessmodells verwendet werden, wird die Verwendung des aktuellen Funktionsapproximators FAj anhand der Auswahlkriterien automatisch überprüft: Für die Zustandsvariablen sₜ der jüngsten Vergangenheit werden mit allen n Funktionsapproximatoren FAi die Prognosefehler eᵢ, berechnet, d.h. die Abweichungen zwischen den Prognosen der Funktionsapproximatoren FAi und den aktuellen Werten der Zustandsvariablen sₜ berechnet. Der Funktionsapproximator FAj mit dem aktuell kleinsten Prognosefehler eⱼ wird mittels eines ersten Selektors 21 ausgewählt. Dieser (eventuell neu) ausgewählte Funktionsapproximator FAj gibt somit die aktuelle Prozessdynamik am besten wieder.

Den abstrakten Funktionsapproximatoren FAi sind jeweils körperlich konkrete Regler Ri zugeordnet, die vorliegend im Rechner 11 organisiert sind, aber auch gesonderte Vorrichtungen sein können. Der erste Selektor 21 wählt daher mittels eines zweiten Selektors 22, beispielsweise eines Multiplexers, denjenigen Regler Rᵢ aus, welcher dem besagten, ausgewählten Funktionsapproximator FAj mit dem geringsten aktuellen Prognosefehler eⱼ entspricht. Der ausgewählte Regler Rⱼ regelt den Regelkreis, indem er mittels der Stellvorrichtungen 9 auf die Strecke (den Ofen 3) einwirkt.

Somit ist es möglich, der jeweiligen Prozessdynamik angepasste Prozessmodelle bzw. Prozessmodellteile zu entwickeln und automatisch zu aktivieren.

### Bezugszeichenliste

- 1: Anlage
- 3: Ofen, Strecke
- 5: Beobachtungsvorrichtung
- 7: Sensor
- 9: Stellvorrichtung
- 11: Rechner
- 21: erster Selektor
- 22: zweiter Selektor
- eᵢ: Prognosefehler
- F: Flammenkörper
- FAi: Funktionsapproximator
- G: Gut
- j: Index des ausgewählten Funktionsapproximators
- L: Luft
- n: Anzahl der Funktionsapproximatoren und Zeitbereiche
- Rᵢ: Regler
- Sₜ: Zustandsvariable
- to, t₁: Zeitpunkt
- ZBi: Zeitbereich

## Patentansprüche

1. Regelkreis zur Regelung eines Verbrennungsprozesses in einer Anlage (1), insbesondere einem Kraftwerk, einer Müllverbrennungsanlage oder einem Zementwerk, mit einer Strecke (3) zum Umsetzen von Gut (G) unter Zufuhr von Luft (L) mittels des Verbrennungsprozesses unter Ausbildung wenigstens eines Flammenkörpers (F), wenigstens einer den Flammenkörper (F) bildlich erfassenden Beobachtungsvorrichtung (5) und weiterer Sensoren (7) zur Ermittlung der den Zustand des Systems in der Anlage (1) beschreibenden Zustandsvariablen (Sₜ), wenigstens einem Regler (Rᵢ) und oder einem Rechner (11), zur Bewertung der Zustandsvariablen (Sₜ) und ein Prozessmodell das geeignete Aktionen auswählt und durch die Aktionen ansteuerbare Stellvorrichtungen (9) für wenigstens die Zufuhr von Gut (G) und/oder Luft (L), **dadurch gekennzeichnet, dass** das Prozessmodell für verschiedene Prozessdynamiken spezialisierte Funktionsapproximatoren (FAi) bereithält, von denen ein Selektor (21, 22) eine auswählt, und ein dem ausgewählten Funktionsapproximator (FAj) zugeordneter Regler (Rᵢ) zur Regelung des Regelkreises dient.

2. Regelkreis nach Anspruch 1, **dadurch gekennzeichnet, dass** der erster Selektor (21) den Funktionsapproximator (FAj) aufgrund eines minimalen Prognosefehlers (eᵢ) auswählt.

3. Regelkreis nach Anspruch 2, **dadurch gekennzeichnet, dass** als Prognosefehler (eᵢ) eines Funktionsapproximators (FAi) die Abweichung zwischen der Prognose des Funktionsapproximators (FAi) und den aktuellen Werten der Zustandsvariablen (Sₜ) berechnet wird.

4. Regelkreis nach einem der vorhergehenden Ansprüche, **dadurch gekennzeichnet, dass** die Verwendung des ausgewählten Funktionsapproximators (FAi) in bestimmten zeitlichen Abständen anhand der Auswahlkriterien überprüft wird.

5. Verfahren zum Erstellen eines Prozessmodells, das in einem Regelkreis nach einem der vorhergehenden Ansprüche eingesetzt wird, **dadurch gekennzeichnet, dass** die verschiedenen Funktionsapproximatoren (FAi) auf verschiedenen Zeitbereichen (ZBi) trainiert werden.

6. Verfahren nach Anspruch 5, **dadurch gekennzeichnet, dass** in einem ersten Schritt als Ansatz mehrere Funktionsapproximatoren (FAi) gewählt werden und in einem zweien Schritt der Gesamt-Zeitbereich (ZB) der für Trainingszwecke zur Verfügung stehenden, zeitabhängigen Daten in mehrere Zeitbereiche (ZBi) unterteilt wird, denen jeweils genau ein Funktionsapproximator (FAi) zugeordnet ist.

7. Verfahren nach Anspruch 6, **dadurch gekennzeichnet, dass** in einem dritten Schritt die Funktionsapproximatoren (FAi) ihrem jeweiligen Zeitbereich (ZBi) trainiert werden.

8. Verfahren nach Anspruch 7, **dadurch gekennzeichnet, dass** in einem vierten Schritt alle Funktionsapproximatoren (FAi) auf dem Gesamt-Zeitbereich ZB getestet werden, insbesondere durch Berechnung ihres jeweiligen Prognosefehlers (eᵢ).

9. Verfahren nach Anspruch 8, **dadurch gekennzeichnet, dass** in einem fünften Schritt die Zeitbereiche (ZBi) ermittelt werden, in denen jeder Funktionsapproximator (FAi) den kleinsten Prognosefehler (eᵢ) erzielt hat, und diese Zeitbereiche (ZBi) den jeweiligen Funktionsapproximatoren (FAi) zugeordnet werden.

10. Verfahren nach Anspruch 9, **dadurch gekennzeichnet, dass** in einem sechsten Schritt geprüft wird, ob sich die Anordnung der Zeitbereiche (ZBi) noch ändert, wobei in diesem Fall die Funktionsapproximatoren (FAi) nochmals trainiert werden, andernfalls aber das Verfahren im konvergierten Zustand abgebrochen wird.

## Claims

1. A control loop for regulating a combustion process in a plant (1), in particular a power-generating plant, a waste incineration plant or a cement works, having a controlled system (3) for converting material (G) by means of the combustion process, while supplying air (L), with at least one flame body (F) being formed, having also at least one observation device (5) for imaging the flame body (F) and having further sensors (7) for determining the state variables (Sₜ) that describe the state of the system in the plant (1), and having at least one regulator (Rᵢ) and or a computer (11) for evaluating the state variables (Sₜ) and a process model selecting suitable actions, and having also adjustment devices (9) that can be controlled by the actions for at least the supply of material (G) and/or air (L), **characterized in that** the process model contains function approximators (FAi) specialized for various process dynamics, one of which function approximators is selected by a selector (21, 22), and a regulator (Rᵢ) assigned to the selected function approximator (FAj) is used to regulate the control loop.

2. A control loop according to Claim 1, **characterized in that** the first selector (21) selects the function approximator (FAj) on the basis of a minimal prediction error (eᵢ).

3. A control loop according to Claim 2, **characterized in that** the deviation between the prediction of a function approximator (FAi) and the current values of the state variables (Sₜ) is calculated as the prediction error (eᵢ) of a function approximator (FAi).

4. A control loop according to any of the preceding claims, **characterized in that** the use of the chosen function approximator (FAi) is checked at certain time intervals on the basis of the selection criteria.

5. A method for creating a process model that is used in a control loop according to any of the preceding claims, **characterized in that** the different function approximators (FAi) are trained to different time ranges (ZBi).

6. A method according to Claim 5, **characterized in that** in a first step, as a starting point, several function approximators (FAi) are selected and in a second step the overall time range (ZB) of the time-dependent data available for training purposes is subdivided into several time ranges (ZBi) to each of which precisely one function approximator (FAi) is assigned.

7. A method according to Claim 6, **characterized in that** in a third step the function approximators (FAi) are trained to their respective time range (ZBi).

8. A method according to Claim 7, **characterized in that** in a fourth step all the function approximators (FAi) are tested over the overall time range (ZB), in particular by calculating their respective prediction error (eᵢ).

9. A method according to Claim 8, **characterized in that** in a fifth step those time ranges (ZBi) are determined in which each function approximator (FAi) has achieved the smallest prediction error (e;), and these time ranges (ZBi) are assigned to the respective function approximators (FAi).

10. A method according to Claim 9, **characterized in that** in a sixth step a check is performed to determine whether the arrangement of the time ranges (ZBi) is still undergoing change, in which case the function approximators (FAi) are retrained; if this is not the case, the procedure is terminated in the converged state.

## Revendications

1. Boucle de réglage pour le réglage d'un processus de combustion dans une installation (1), en particulier dans une centrale électrique, un incinérateur ou une cimenterie, avec une ligne (3) de transfert des produits (G) ayant un apport d'air (L) à travers le processus de combustion, avec la formation d'au moins un corps de flamme (F), au moins un (F) dispositif d'observation (5) qui relève l'image du corps de flamme, et des senseurs (7) additionnels afin de déterminer la variable d'état (S₁) qui décrit l'état du système dans l'installation (1), au moins un régulateur (Rᵢ) et/ou un calculateur (11) pour l'évaluation de la variable d'état (S₁) et un modèle de fonctionnement qui sélectionne des actions appropriées, et des dispositifs de réglage (9) contrôlables à travers les actions pour au moins l'apport de produits (G) et/ou d'air (L), **caractérisée en ce que** le modèle de fonctionnement pour des dynamiques de fonctionnement diverses fournit des approximateurs de fonctions spécialisés (FAi), parmi lesquels un sélecteur (21, 22) en sélectionne un, et un régulateur (Rᵢ) associé à l'approximateur de fonctions sélectionné (FAj) qui sert au réglage de la boucle de réglage.

2. Boucle de réglage selon la revendication 1, **caractérisée en ce que** le premier sélecteur (21) sélectionne l'approximateur de fonctions (FAj) à cause d'une erreur de prévision minimale (eᵢ).

3. Boucle de réglage selon la revendication 2, **caractérisée en ce que** l'erreur de prévision de l'approximateur de fonctions (FAi) par rapport aux valeurs actuelles de la variable d'état (S₁) est calculée comme une erreur de prévision (eᵢ) d'un approximateur de fonctions (FAi).

4. Boucle de réglage selon l'une quelconque des revendications précédentes, **caractérisée en ce que** l'utilisation de l'approximateur de fonctions sélectionné (FAi) est contrôlée à intervalles réguliers en base aux critères de sélection.

5. Procédé de détermination d'un modèle de fonctionnement inséré dans une boucle de réglage selon l'une quelconque des revendications précédentes, **caractérisé en ce que** les divers approximateurs de fonctions (FAi) sont entraînés vers diverses plages de temporisation (ZBi).

6. Procédé selon la revendication 5, **caractérisé en ce que**, dans une première étape, selon une approche, plusieurs approximateurs de fonctions (FAi) sont sélectionnés, et dans une seconde étape, la plage de temporisation totale (ZB) des données temporellement dépendantes et disponibles pour l'entraînement est subdivisée en plusieurs plages de temporisation (ZBi), auxquelles est associé, chaque fois de manière exacte, un approximateur de fonctions (FAi).

7. Procédé selon la revendication 6, **caractérisé en ce que**, dans une troisième étape, les approximateurs de fonctions (FAi) sont entraînés vers leur plage de temporisation respective (ZBi).

8. Procédé selon la revendication 7, **caractérisé en ce que**, dans une quatrième étape, tous les approximateurs de fonctions (FAi) sont testés sur la plage de temporisation totale ZB, en particulier en calculant leur erreur de prévision respective (eᵢ).

9. Procédé selon la revendication 8, **caractérisé en ce que**, dans une cinquième étape, les plages de temporisation (ZBᵢ) sont déterminées, dans lesquelles chaque approximateur de fonctions (FAi) a obtenu la plus petite erreur de prévision, et ces plages de temporisation (ZBi) sont associées aux approximateurs de fonctions (FAi) respectifs.

10. Procédé selon la revendication 9, **caractérisé en ce que**, dans une sixième étape, on vérifie si la disposition des plages de temporisation (ZBᵢ) change encore, auquel cas les approximateurs de fonctions (FAi) sont à nouveau entraînés, autrement, le procédé est interrompu dans un état convergeant.
